# EUROPEAN PATENT SPECIFICATION

(11) **EP 2 007 058 B1**
(45) Date of publication and mention of the grant of the patent: **26.08.2009**
(21) Application number: 07301129.8
(22) Date of filing: 19.06.2007
(51) Int. Cl.: H04L 1/18, H04W 72/04

(54) **Method for allocating resources in a mobile radio communication network, and the corresponding transmitter and receiver.**
Verfahren zur Zuweisung von Ressourcen in einem mobilen Funkkommunikationsnetzwerk sowie dazu passende Sende- und Empfangsgeräte
Procédé d'attribution de ressources dans un réseau de communication radio mobile, transmetteur et récepteur correspondants

(43) Date of publication of application: 24.12.2008
(73) Proprietor: Alcatel Lucent, 75008 Paris (FR)
(72) Inventor: Kaminski, Stephen, D-73054 Eislingen (DE); Doetsch, Dr. Uwe, D-74392 Freudental (DE)
(74) Representative: Wetzel, Emmanuelle

(56) References cited:
- EP-A- 1 557 967
- EP-A- 1 557 968
- EP-A- 1 784 036
- WO-A-20/07065272

## Description

### BACKGROUND OF THE INVENTION

The present invention relates to a method for allocating resources to transmitter adapted to send data over a radio link to a receiver in a mobile radio communication network.

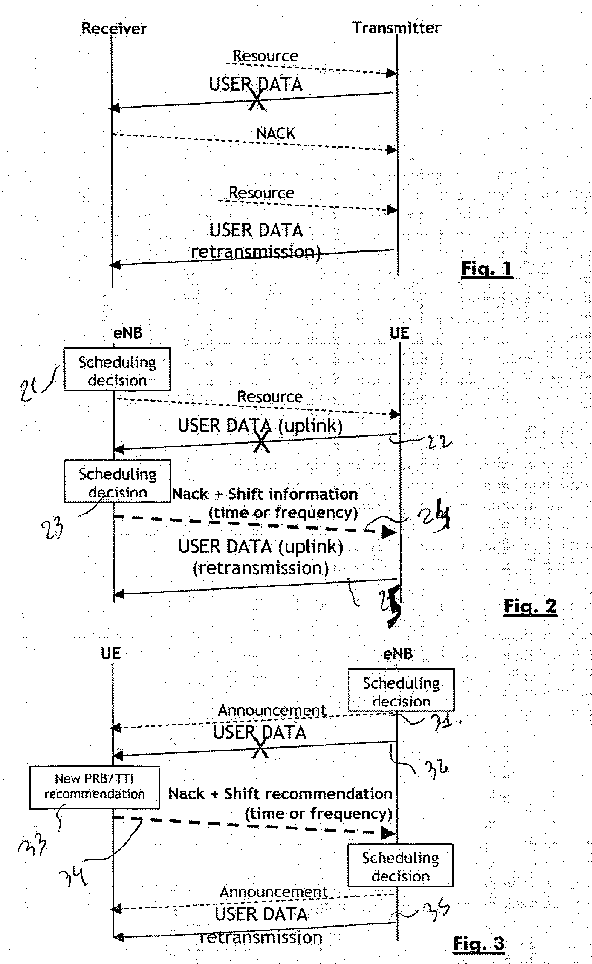

During data transmission over radio links. it is often necessary to track and retransmit some data portions which have not or erroneously been received due to distortions of the radio signal. ARQ (Automatic Repeat ReQuest) or HARQ (Hybrid Automatic Repeat reQuest) protocols have been designed for this purpose and are applied in most radio communication networks for guarantying the integrity of the data transmitted over radio links. In such protocols, each data entity is labeled with a sequence number. It is the task of the receiver to detect wether all data entities e.g. with increasing and continuous sequence numbers are received. If a sequence number is missing in the flow of received data entities, the receiver generates a feedback message (e.g. NACK : non acknowledgement) containing the sequence number of the missing data entity. Upon reception of such a NACK, the transmitter, which stores all data entities until they are positively acknowledged, retrieves the missing data entity and retransmits it on the radio link. On the contrary, if data are correctly received a positive acknowledgement (e.g ACK) is sent back to the transmitter Figure 1 shows a message flow between a transmitter and a receiver implementing a HARQ mechanism as known in the prior art. A resource is allocated to the transmitter by a scheduler. The transmitter sends user data using this resource to the receiver. This transmission is not successful due e.g. to bad channel conditions. The receiver detects this missing data and sends a NACK message back to the transmitter. Optionally, in case of dynamic resource allocation the transmitter gets a new resource allocation from the scheduler and resends the user data using this new resource to the receiver. In case of static resource allocation, the transmitter repeats the user data on the same resource as previously allocated.

This basic mechanism has been adapted by different improvements depending on the requirements and constraints of the different radio communication networks.

Document WO 2007/065272 discloses a resource assignment method supporting an HARQ retransmission protocol.

OFDM based air-interfaces have been more and more used in order to increase the data rate of the transmission on the air interface. Such OFDM systems are based on the fact that the different (orthogonal) sub carriers may be used in parallel to transmit data over the air interface. In these systems, the time and frequency extensions are used to define the extension of the data entity. Such data entities are so-called Physical Resource blocks PRBs consisting of a set of contiguous sub carriers and having a predefined time extension.

Some sets of sub carriers may experience bad radio channel quality over a rather long period of time resulting in that not only the first transmission of user data but also its retransmission on the same set of sub carrier have a rather high probability to not allow for a successful transmission.

It has then be suggested, in case of erroneous transmission to allocate resources outside of the resources used for the first transmission. Consequently, the resource allocation mechanism for retransmission may select a RPB preferably having a minimum distance to the erroneous RPB chosen so that the retransmission RPB is shifted by multiples of the radio channel coherence bandwidth in frequency domain or of the radio channel coherence time in the time domain.

Such shifts in frequency extension and time extension must be communicated to the transmitter for it to adapt to better channel conditions. Such a feedback is not necessary in case the transmitter applies a deterministic frequency extension shift known at both the transmitter and the receiver. Such a deterministic scheme is nevertheless not optimal.

In case of non deterministic new resource allocation for retransmissions of user data, new frequency extension and/or time extension have to be communicated through a feedback message to the transmitter by the receiver or by any other network entity in charge of resource scheduling. Usually, this entity is in the e-NB (enhanced Node B) for radio communication systems as defined in 3GPP LTE systems. Alternatively, it may be located or in any other central entity of the network.

Usually, the L1/L2 control channel is used for signaling dynamic resource assignment. In case of a 5MHz bandwidth, the capacity of the L1/L2 control channel is limited to approximately and not more than 5 to 6 signaling of resource assignments for each transmit directions. Using this mechanism for signaling of resource assignment in case of retransmission would restrict greatly the possibility to signal resource assignment for initial transmissions causing a starvation of new resource allocation in a system experiencing particularly degraded channel conditions.

A particular object of the present invention is to provide an improved signaling of the resource assignment for further transmission of data , especially in a multi carrier radio communication network.

Another object of the invention is to provide corresponding transmitter and receiver adapted to perform this method.

### SUMMARY OF THE INVENTION

These objects, and others that appear below, are achieved by a method for controlling the retransmission of data erroneously transmitted over a radio link between a transmitter and a receiver in a mobile radio communication network according to claim 1, a receiver according to claim 8 and a transmitter according to claim 10.

According to the present invention, upon generation of a feedback message according to an ARQ/HARQ protocol, new frequency and or time extensions are determined for the physical resource block to be used for further transmission of data at said transmitter. An information enabling it to univocally retrieve the new frequency and/or time extension is included in the feedback message sent to the transmitter. Upon reception of the feedback message modified according to the present invention, the transmitter retrieves the new frequency and/or time extension of the resource allocated for further transmission and sends further data in the newly allocated resource.

In a first embodiment, if a positive feedback message is sent to the transmitter, the newly allocated resource is used for transmission of new data.

In a second embodiment, if a negative feedback message is sent to the transmitter, the newly allocated resource is used for the retransmission of the erroneously transmitted data.

The method according to the present invention presents the advantage to combine the signaling of a feedback message (ACK, NACK) with the signaling of a new resource allocated for the further transmission of data.

Another advantage of the present invention consists in not affecting the capacity of resource assignments for initial transmissions as performed on the L1/L2 control channel. Thus, the resource assignment for initial transmissions is not at all dependent on the channel quality since this capacity remains constant regardless of the number of retransmissions having to be scheduled.

Further advantageous features of the invention are defined in the dependent claims.

### BRIEF DESCRIPTION OF THE DRAWINGS

Other characteristics and advantages of the invention will appear on reading the following description of a preferred embodiment given by way of non-limiting illustrations, and from the accompanying drawings, in which:
- Figure 1 shows a message flow between a transmitter and a receiver implementing a HARQ mechanism as known in the prior art;
- Figure 2 details a message flow between a terminal and a base station when data are sent in the uplink direction using a retransmission control according to the present invention;
- Figure 3 details a message flow between a terminal and a base station when data are sent in the downlink direction using a retransmission control according to the present invention;
- Figure 4 shows an example for the structure of a modified feedback message according to the present invention;
- Figure 5 shows an embodiment of a base station according to the present invention;
- Figure 6 shows an embodiment of a terminal according to the present invention.

### DETAILED DESCRIPTION OF THE INVENTION

Figure 1 has already been described in connection with prior art.

Figure 2 details a message flow between a terminal and a base station when data are sent in the uplink direction using a retransmission control according to the present invention.

Step 21 consists in assigning a resource (or PRB) to the terminal UE needing to send uplink data. This resource assignment is preferably performed at the base station enhanced Node B as foreseen for 3GPP LTE systems. The entity performing the scheduling is nevertheless not necessarily the base station. It will be understood by those skilled in the art that the scheduling may as well be performed by any other central entity of the network.

Step 22 consists in sending by the terminal UE user data in the uplink using the allocated resource. The uplink transmission is distorted on the air interface and not properly received at the base station.

Step 23 consists in detecting the erroneous transmission at the base station eNB and generating a scheduling decision for the retransmission of the erroneous data. For this purpose, a new resource is determined according to a method which is not part of the present invention. Some criteria which may be taken into account could be to select the resource by guarantying a minimum distance between the frequency extension of the erroneous Physical Resource Block and the Physical Resource Block for retransmission are multiples of the radio channel coherence bandwidth.

A Physical Resource Block should be understood as a resource that can be allocated to a user. Ressource and RPB are used with the same meaning in the context of this invention. Preferably, a PRB consists in an OFDM system of M sub-carriers in the frequency domain that can either be consecutive or non consecutive. In the time domain, a PRB has an extension of N consecutive time symbols (e.g. OFDM symbols).

It will be understood by those skilled in the art that the invention may apply if the PRB has only a frequency extension or only a time extension or a mix of both time and frequency extension.

Again, the base station eNB itself may implement the module for determining the resource for the retransmission or any other central entity in the network which may then communicate the characteristics of the selected resource to the base station in an appropriate message.

Step 24 consists according to the present invention to generate at the base station eNB and send to the terminal UE a modified NACK message comprising as well the usual information indicating that the user data were not correctly received and an information related to a new frequency extension and/or time extension for the resource to be used for retransmission.

Step 25 consists in sending the retransmission of the user data in the new allocated resource as indicated in the NACK message.

The method has been here described in the case a NACK message is sent back to the transmitter, the information regarding a new allocated resource included in the modified NACK feedback message being used for retransmission of the erroneously received data.

It will be understood by those skilled in the art that a similar process can be applied in case an ACK message is sent back to the transmitter. In such a case a modified ACK message containing information related to new resource the transmitter has to use for further data transmission can be generated. This remark applies to the uplink direction as well as for the downlink direction.

Figure 3 details a message flow between a terminal and a base station when data are sent in the downlink direction using a retransmission control according to the present invention.

Step 31 consists in assigning a resource to send downlink data. This resource assignment is preferably performed at the base station (enhanced Node B as foreseen for 3GPP LTE systems). The entity performing the scheduling is nevertheless not necessarily the base station. It will be understood by those skilled in the art that the scheduling may as well be performed by any other central entity of the network. The resource assignment is then announced to the terminal.

Step 32 consists in sending by the base station eNB user data in the downlink using the allocated resource. The downlink transmission is distorted on the air interface and not properly received at the terminal UE.

Step 33 consists in detecting the erroneous transmission at the terminal UE and generating a scheduling recommendation for the retransmission of the erroneous data. For this purpose, a new resource is determined according to a method which is not part of the present invention. Some criteria which may be taken into account could be to make radio link measurements on the different sub carriers to detect which part of the frequency range is subject to good channel conditions.

Step 34 consists, according to the present invention to generate at the terminal UE and send to the base station eNB a modified NACK message comprising as well the usual information indicating that the user data were not correctly received and an information related to a recommendation for a new frequency extension and/or time extension for the resource to be used for retransmission.

Step 35 consists in sending the retransmission of the user data in the new allocated resource as indicated in the NACK message.

Optionally, in case the recommended new resource as determined by the terminal UE cannot be used because it was in parallel reserved by the scheduler, the scheduler may determine another resource and announce it to the UE.

It will be understood by those skilled in the art that several different actions may be undertaken upon reception of the modified feedback message without departing from the scope of the present invention. A first action as described in connection with figure 2 may be to really use the new resources part of the modified feedback message. A second action as described in connection with figure 3 may be only to forward the information related to the new resource time and frequency extension to a scheduler for him to check if the recommended new resource is compatible with other already performed resource allocations. Still another possible action would be to ignore the part of the feedback message containing new resource time and/or frequency extension for backward compatibility reason.

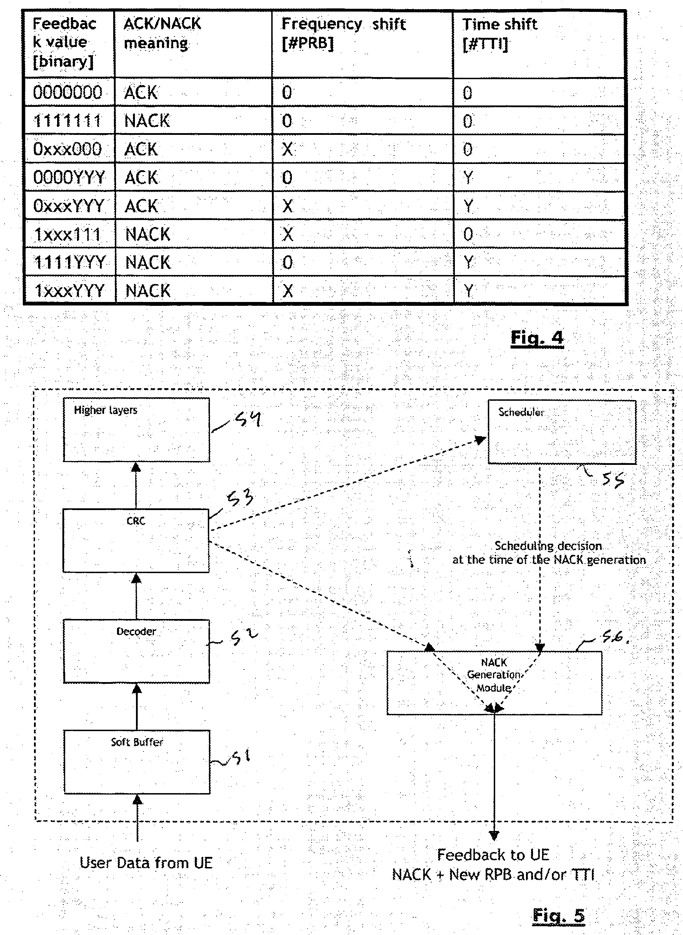

Figure 4 shows an example for the structure of a modified feedback message. According to the present invention, as well the indication of erroneously received data as information related to the new resource allocated for the retransmission is included in the feedback message. The feedback value is coded on a predefined number of bits here for example 7 bits.

The first bit indicates if the feedback message contains a positive (ACK) or a negative acknowledgment (NACK). In this embodiment, both positive and negative modified acknowledgement messages are sent. In the framework of the invention, it is only necessary that modified negative acknowledgment messages are sent.

The 3 following bits are used in order to code the frequency shift of the new assigned resource for retransmission compared to the previously assigned resource. Consequently a frequency shift from 0 to 7 PRB can be coded. In an embodiment of the invention, the values represent predefined multiples of a minimum granularity, e.g. 2 PRBs, thus representing a frequency shift from 0 to 14 PRB in steps of two PRBs.

The 3 last bits are used in order to code the time shift of the new assigned resource for retransmission compared to the previously assigned resource. Consequently a time shift from 0 to 7 TTI can be coded. In an embodiment of the invention, the values represent predefined multiples of a minimum granularity, e.g. 5 TTIs, thus representing a frequency shift from 0 to 35 TTI in steps of five TTIs.

It will be understood by a person skilled in the art that the number of bits for coding the frequency shift and the time shift must be chosen according to the system characteristics.

Other embodiments may be envisaged not coding the shift compared to the previously assigned resource but coding the new assigned resource as an absolute value. This solution would nevertheless require more bits. If the solution of coding the absolute resource value is used, the number of bits to be used can be reduced in that only a subset of all possible combinations is used.

Figure 5 shows an embodiment of a base station according to the present invention. In this embodiment, the base station comprises a soft buffer 51, a decoder 52, a error check module 53, higher layer module 54, a scheduler 55 and a ACK/NACK generation module 56.

User data received from a terminal are received and stored at soft buffer 51 which forwards them to decoder 52. Decoder 52 forwards the decoded data to error check module 53 which detects if an erroneous transmission has occurred. Detection of an erroneous transmission may be detected by checking the CRC (Cyclic Redundancy Check) of the received user data. If this calculated CRC does not match with the CRC included as redundancy to the user data, then an erroneous reception is signaled. Other criteria for erroneous reception would be a missing user data sequence number in the user data packet sequence.

CRC check module is connected on the one hand with higher layer module 54 in case a correct user data was detected and on the other hand with scheduler 55 and ACK/NACK generation module 56.

Scheduler 55 is triggered by the CRC check module 53 upon detection of an erroneous user data in order to determine a better appropriate resource for retransmission which would reduce the error probability. According to the invention, scheduler 55 forwards the determined new resource to the ACK/NACK generation module 56.

In parallel, CRC check module 53 triggers ACK/NACK Generation Module 56 in order for it to generate a feedback message according to the ARQ/HARQ protocol modified according to the present invention in that the modified NACK message contains in addition information related to the frequency and/or time extension of the new assigned resource for retransmission. The feedback message may be preferably constructed as show on figure 4.

ACK/NACK generation Module 56 then transmits this feedback message back to the terminal over the air interface.

In an alternative embodiment, scheduler 55 is not part of the base station. In this case, the base station has an interface to an entity comprising the scheduler. The base station sends a request for new resource allocation to the scheduler in case of necessity of a retransmission and gets over the interface a message containing an information related to the new determined resource.

In an alternative embodiment the ACK/NACK generation module can be triggered upon correct reception and not only upon erroneous reception. In this case, a modified ACK message containing information related to the new resource is sent towards the transmitter.

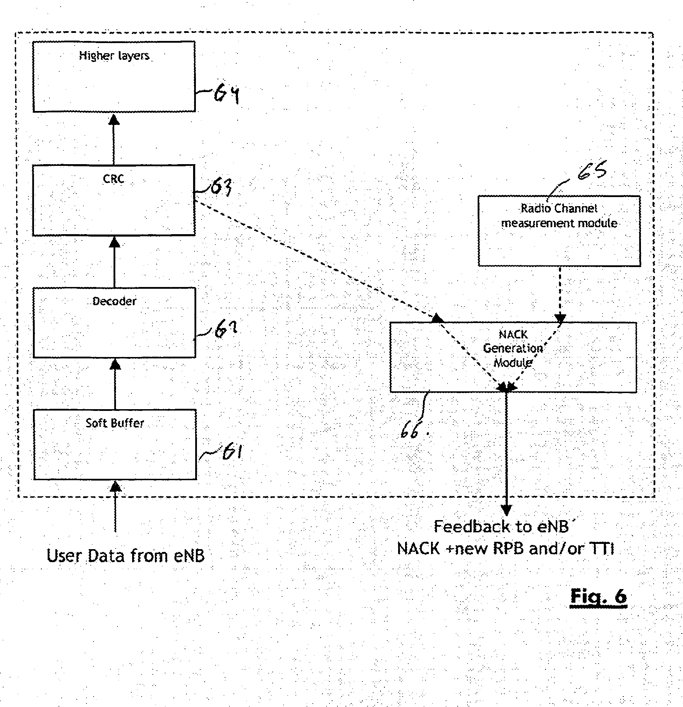

Figure 6 shows an embodiment of a terminal according to the present invention.

In this embodiment, the terminal comprises a soft buffer 61, a decoder 62, a error check module 63, higher layer module 64, a radio channel measurement module 65 and a ACK/NACK generation module 66.

User data received from a base station are received and stored at soft buffer 61 which forwards them to decoder 62. Decoder 62 forwards the decoded data to error check module 63 which detects if an erroneous transmission has occurred. Detection of an erroneous transmission may be performed by checking the CRC (Cyclic Redundancy Check) of the received user data. If this calculated CRC does not match with the CRC included as redundancy to the user data, then an erroneous reception is signaled. Other criteria for erroneous reception would be a missing user data packet in the user data packet sequence detected by a non continuous sequence of sequence numbers.

CRC check module 63 is connected on the one hand with higher layer module 64 in case a correct user data was detected and on the other hand with radio channel measurement module 65 and ACK/NACK generation module 66.

Radio channel measurement module 65 is triggered by the CRC check module 53 upon detection of an erroneous user data in order to analyze the current radio channel quality situation on the different sub carriers of the system and indicate sub carriers which would have a reduced error probability for the retransmission. According to the invention, the radio channel measurement module 65 forwards this information to the ACK/NACK generation module 66.

In parallel, CRC check module 63 triggers ACK/NACK Generation Module 66 in order for it to generate a feedback message according to the ARQ/HARQ protocol modified according to the present invention in that the modified feedback message contains in addition information related to the frequency and/or time extension of the recommended assigned resource for retransmission. The feedback message may be preferably constructed as show in figure 4.

ACK/NACK generation Module 66 then transmits this feedback message back to the terminal over the air interface.

In this case, since the scheduler which is responsible of the whole resource allocation for the base station has not been contacted for determining the recommended new resource, it may happen that the recommended resource is no more available. The scheduler then assigns another resource for retransmission. Alternatively, it could be envisaged that the scheduler is informed on the recommended resource for retransmission by the terminal and can approve it or assign another resource before the modified feedback message is transmitted.

It will be understood by those skilled in the art that the way a new resource is determined in not a mandatory feature of the present invention since it may happen in several different ways.

In an alternative embodiment the ACK/NACK generation module 66 can be triggered upon correct reception and not only upon erroneous reception. In this case, a modified ACK message containing information related to the new resource is sent towards the transmitter.

The present invention is especially well suitable to be applied in resource allocation for OFDMA-based 3GPP LTE downlink but could be applied in a lot of other radio communication networks.

## Claims

1. Method for allocating resources to a transmitter adopted to send data over a radio link to a receiver in a mobile radio communication network, said data being transmitted in physical resource blocks allocated by a resource allocation mechanism (21), said physical resource block being defined by its frequency extension and its time extension, an automatic repeat request protocol being used for signalling erroneously and/or correctly received data through a feedback message (23), said method being **characterised in that** it comprises the steps of:
- determining a new frequency extension and/or time extension for a resource radio block to be used for further transmission of data by said transmitter;
- including (24) in said feedback message an information related to the determined new frequency extension and/or time extension.

2. Method according to claim 1, further comprising the step of:
- upon reception of said feedback message at said transmitter, transmitting further data using a resource radio block with said new frequency extension and/or time extension.

3. Method according to claim 1 further comprising the step of:
- upon reception of said feedback message at said transmitter, forwarding said information related to the determined new frequency extension and/or time extension to a scheduler for allocating resources, said scheduler taking it into account for allocating resources.

4. Method according to claim 1, wherein said information related to the new frequency and/or time extension is coded in a predetermined number of bits in said message and can be decoded using a look up table.

5. Method according to claim 1, wherein said method is used for controlling the retransmission of erroneously transmitted data, said method comprising the step of including in a feedback message signalling an erroneously transmission a new frequency and/or time extension to be used for the retransmission of said erroneously transmitted data.

6. Method according to claim 1, wherein the air interface between said transmitter and receiver is based on OFDMA technology.

7. Method according to claim 1, wherein said step of determining the new frequency extension consists in guarantying a minimum distance between the frequency extension of the erroneous Physical Resource Block and the Physical Resource Block for retransmission are multiples of the radio channel coherence bandwidth.

8. Receiver adapted to be used in a wireless communication network for receiving data from a transmitter, said data being included in physical resource blocks defined by their frequency extension and their time extension, said receiver comprising means (53) for implementing on automatic repeat request protocol, said receiver further comprising means (56) for signalling erroneously and/or correctly received data through a feedback message to said transmitter, said receiver being **characterised in that** it comprises:
- means (55) for determining a new frequency extension and/or time extension for a physical resource block to be used for further transmission of data by said transmitter;
- means (56) for including in said feedback message an information related to the new frequency extension and/or time extension.

9. Receiver according to claim 8, wherein said receiver is a base station adapted to be used in a wireless or mobile communication system.

10. Transmitter adapted to be used in a wireless communication network for transmitting data to a receiver, said data being included in physical resource blocks defined by their frequency extension and by their time extension, said transmitter comprising means for receiving a feedback message from said receiver upon erroneously and/or correctly transmission of said physical radio blocks, said transmitter being **characterised in that** it comprises:
- means for extracting out of said feedback message an information related to a new frequency extension and/or time extension for a physical resource block to be used for further transmission of data by said transmitter;
- means for transmitting said further data using a physical resource block with said new frequency extension and/or time extension.

## Patentansprüche

1. Verfahren zur Zuweisung von Ressourcen an ein Sendegerät, welches fähig ist, Daten über eine Funkverbindung an ein Empfangsgerät in einem mobilen Funkkommunikationsnetzwerk zu senden, wobei die besagten Daten in von einem Ressourcenzuweisungsmechanismus (21) zugewiesenen physikalischen Ressourcenblöcken übertragen werden, wobei der besagte physikalische Ressourcenblock durch seine Frequenzerweiterung und seine Zeitverlängerung definiert wird, wobei ein automatisches Wiederholungsanforderungsprotokoll für die Signalisierung von fehlerhaft und/oder korrekt empfangenen Daten über eine Rückkopplungsnachricht (23) verwendet wird, wobei das Verfahren **dadurch gekennzeichnet ist, dass** es die folgenden Schritte umfasst:
- Bestimmen einer neuen Frequenzerweiterung und/oder Zeitverlängerung für einen Funkressourcenblock zur Verwendung für eine weitere Übertragung von Daten durch das besagte Sendegerät;
- Einfügen (24) einer Information in Bezug auf die bestimmte neue Frequenzerweiterung und/oder Zeitverlängerung in die besagte Rückkopplungsnachricht.

2. Verfahren nach Anspruch 1, weiterhin den folgenden Schritt umfassend:
- Nach Empfang der besagten Rückkopplungsnachricht am besagten Sendegerät, Übertragen weiterer Daten unter Verwendung eines Funkressourcenblocks mit der besagten neuen Frequenzerweiterung und/oder Zeitverlängerung.

3. Verfahren nach Anspruch 1, weiterhin den folgenden Schritt umfassend:
- Nach Empfang der besagten Rückkopplungsnachricht am besagten Sendegerät, Weiterleiten der besagten Informationen in Bezug auf die bestimmte neue Frequenzerweiterung und/oder Zeitverlängerung an einen Zeitplaner für die Zuweisung von Ressourcen, wobei der besagte Zeitplaner diese bei der Zuweisung von Ressourcen berücksichtigt.

4. Verfahren nach Anspruch 1, wobei die besagten Informationen in Bezug auf die neue Frequenzerweiterung und/oder Zeitverlängerung in eine vorbestimmte Anzahl von Bits in der besagten Nachricht codiert werden und unter Verwendung einer Lookup-Tabelle decodiert werden können.

5. Verfahren nach Anspruch 1, wobei das besagte Verfahren zur Steuerung der Übertragungswiederholung von fehlerhaft übertragenen Daten angewendet wird, wobei das besagte Verfahren den Schritt des Einfügens einer neuen Frequenzerweiterung und/oder Zeitverlängerung, welche für die Übertragungswiederholung von fehlerhaft übertragenen Daten zu verwenden sind, in eine eine fehlerhafte Übertragung signalisierende Rückkopplungsnachricht umfasst.

6. Verfahren nach Anspruch 1, wobei die Luftschnittstelle zwischen dem besagten Sendegerät und dem besagten Empfangsgerät auf der OFDMA-Technologie basiert.

7. Verfahren nach Anspruch 1, wobei der besagte Schritt des Bestimmens der neuen Frequenzerweiterung darin besteht, zu gewährleisten, dass der Mindestabstand zwischen der Frequenzerweiterung des fehlerhaften physikalischen Ressourcenblocks und des physikalischen Ressourcenblocks für die Übertragungswiederholung ein Mehrfaches der Kohärenzbandbreite des Funkkanals ist.

8. Empfangsgerät zur Verwendung in einem drahtlosen Kommunikationsnetzwerk für den Empfang von Daten von einem Sendegerät, wobei die besagten Daten in von deren Frequenzerweiterung und deren Zeitverlängerung definierten physikalischen Ressourcenblöcken enthalten sind, wobei das besagte Empfangsgerät Mittel (53) zum Implementieren eines automatischen Wiederholungsanforderungsprotokolls umfasst, wobei das Empfangsgerät weiterhin Mittel (56) zum Signalisieren von fehlerhaft und/oder korrekt empfangenen Daten über eine Rückkopplungsnachricht an das besagte Sendegerät umfasst, wobei das besagte Empfangsgerät **dadurch gekennzeichnet ist, dass** es umfasst:
- Mittel (55) zum Bestimmen einer neuen Frequenzerweiterung und/oder Zeitverlängerung für einen physikalischen Ressourcenblock zur Verwendung für eine weitere Übertragung von Daten durch das besagte Sendegerät;
- Mittel (56) zum Einfügen einer Information in Bezug auf die neue Frequenzerweiterung und/oder Zeitverlängerung in die besagte Rückkopplungsnachricht.

9. Empfangsgerät nach Anspruch 8, wobei das besagte Empfangsgerät eine für den Einsatz In einem drahtlosen oder mobilen Kommunikationssystem ausgelegte Basisstation ist.

10. Sendegerät für den Einsatz in einem drahtlosen Kommunikationsnetzwerk zum Übertragen von Daten an ein Empfangsgerät, wobei die besagten Daten in von ihrer Frequenzerweiterung und ihrer Zeitverlängerung definierten physikalischen Ressourcenblöcken enthalten sind, wobei das besagte Sendegerät Mittel zum Empfangen einer Rückkopplungsnachricht von dem besagten Empfangsgerät im Anschluss an eine fehlerhafte und/oder korrekte Übertragung der besagten physikalischen Funkblöcke umfasst, wobei das besagte Sendegerät **dadurch gekennzeichnet ist, dass** es umfasst:
- Mittel zum Extrahieren aus der besagten Rückkopplungsnachricht einer Information in Bezug auf eine neue Frequenzerweiterung und/oder Zeitverlängerung für einen physikalischen Ressourcenblock zur Verwendung für eine weitere Übertragung von Daten durch das besagte Sendegerät;
- Mittel zum Übertragen der besagten weiteren Daten unter Verwendung eines physikalischen Ressourcenblocks mit der besagten neuen Frequenzerweiterung und/oder Zeitverlängerung.

## Revendications

1. Procédé d'affectation des ressources à un émetteur adapté pour envoyer des données sur une liaison hertzienne vers un récepteur dans un réseau de radiocommunication mobile, lesdites données étant émises dans des blocs de ressources physiques affectés par un mécanisme d'affectation des ressources (21), ledit bloc de ressources physiques étant défini par son extension en fréquence et son extension en temps, un protocole de demande de répétition automatique étant utilisé pour signaler les données reçues avec des erreurs et/ou correctes par le biais d'un message de retour (23), ledit procédé étant **caractérisé en ce qu'**il comprend les étapes suivantes :
- Détermination d'une nouvelle extension en fréquence et/ou extension en temps pour un bloc radio de ressources à utiliser pour une nouvelle émission de données par ledit émetteur ;
- Inclusion (24) dans ledit message de retour d'une information en rapport avec la nouvelle extension en fréquence et/ou extension en temps déterminée.

2. Procédé selon la revendication 1, comprenant en outre l'étape suivante :
- Sur réception dudit message de retour au niveau dudit émetteur, émission de nouvelles données en utilisant un bloc radio de ressources avec ladite nouvelle extension en fréquence et/ou extension en temps.

3. Procédé selon la revendication 1, comprenant en outre l'étape suivante :
- Sur réception dudit message de retour au niveau dudit émetteur, transfert de ladite information en rapport avec la nouvelle extension en fréquence et/ou extension en temps déterminée à un ordonnanceur pour affecter des ressources, ledit ordonnanceur la prenant en compte pour affecter les ressources.

4. Procédé selon la revendication 1, ladite information en rapport avec la nouvelle extension en fréquence et/ou extension en temps étant codée en un nombre de bits prédéterminé dans ledit message et pouvant être décodée en utilisant un tableau de recherche.

5. Procédé selon la revendication 1, ledit procédé étant utilisé pour commander la retransmission des données émises avec des erreurs, ledit procédé comprenant l'étape d'inclure dans un message de retour signalant une émission avec erreurs une nouvelle extension en fréquence et/ou en temps à utiliser pour la retransmission desdites données émises avec des erreurs.

6. Procédé selon la revendication 1, l'interface hertzienne entre ledit émetteur et ledit récepteur étant basée sur la technologie OFDMA.

7. Procédé selon la revendication 1, ladite étape de détermination de la nouvelle extension en fréquence consistant à garantir qu'une distance minimale entre l'extension en fréquence du bloc de ressources physiques contenant des erreurs et le bloc de ressources physiques pour la retransmission est un multiple de la largeur de bande de cohérence du canal radio.

8. Récepteur adapté pour être utilisé dans un réseau de communication sans fil pour recevoir des données de la part d'un émetteur, lesdites données étant incluses dans des blocs de ressources physiques définis par leur extension en fréquence et leur extension en temps, ledit récepteur comprenant des moyens (53) pour mettre en oeuvre un protocole de demande de répétition automatique, ledit récepteur comprenant en outre des moyens (56) pour signaler les données reçues avec des erreurs et/ou correctes par le biais d'un message de retour audit émetteur, ledit récepteur étant **caractérisé en ce qu'**il comprend :
- des moyens (55) pour déterminer une nouvelle extension en fréquence et/ou extension en temps pour un bloc de ressources physiques à utiliser pour une nouvelle émission de données par ledit émetteur ;
- des moyens (56) pour inclure dans ledit message de retour une information en rapport avec la nouvelle extension en fréquence et/ou extension en temps.

9. Récepteur selon la revendication 8, ledit récepteur étant une station de base adaptée pour être utilisée dans un système de communication sans fil ou mobile.

10. Émetteur adapté pour être utilisé dans un réseau de communication sans fil pour émettre des données vers un récepteur, lesdites données étant incluses dans des blocs de ressources physiques définis par leur extension en fréquence et leur extension en temps, ledit émetteur comprenant des moyens pour recevoir un message de retour de la part dudit récepteur en cas d'émission avec erreurs et/ou correcte desdits blocs radio physiques, ledit émetteur étant **caractérisé en ce qu'**il comprend :
- des moyens pour extraire dudit message de retour une information en rapport avec une nouvelle extension en fréquence et/ou extension en temps pour un bloc de ressources physiques à utiliser pour une nouvelle émission de données par ledit émetteur ;
- des moyens pour émettre de nouvelles données en utilisant un bloc de ressources physiques avec ladite nouvelle extension en fréquence et/ou extension en temps.
